# EUROPÄISCHE PATENTSCHRIFT

(11) **EP 2 862 075 B1**
(45) Veröffentlichungstag und Bekanntmachung des Hinweises auf die Patenterteilung: **18.05.2022**
(21) Anmeldenummer: 13745333.8
(22) Anmeldetag: 10.06.2013
(51) Int. Cl.: G06F 9/50, G06F 9/54, G09B 19/00, G09B 25/02

(54) **SIMULIEREN EINES KOMPLEXEN SYSTEMS**
SIMULATION OF A COMPLEX SYSTEM
SIMULATION D'UN SYSTÈME COMPLEXE

(30) Priorität: 19.06.2012 DE 102012012044
(43) Veröffentlichungstag der Anmeldung: 22.04.2015
(73) Patentinhaber: Airbus Defence and Space GmbH, 85521 Ottobrunn (DE)
(72) Erfinder: OSWALD, Ralf, 55758 Kempfeld (DE); HUBER, Robert, 93453 Neukirchen (DE); FÖRSTER, Martin, 04626 Schmölln (DE)
(74) Vertreter: LKGLOBAL Lorenz & Kopf PartG mbB Patentanwälte
(86) Internationale Anmeldenummer: PCT/DE2013/000311
(87) Internationale Veröffentlichungsnummer: WO 2013/189475

(56) Entgegenhaltungen:
- WO-A2-2007/109507
- DE-B3-102011 114 225
- US-A1- 2007 286 089
- US-A1- 2008 104 609
- K. Engel, P. Hastreiter, B. Tomandl, K. Eberhardt, T. Ertl: "Combining Local and Remote Visualization Techniques for Interactive Volume Rendering in Medical Applications", Proceedings of the conference on Visualization '00, 2000, XP002715698, IEEE Computer Society Press Los Alamitos, CA, USA ISBN: 1-58113-309-X Gefunden im Internet: URL:http://dl.acm.org/citation.cfm?id=3752 94 [gefunden am 2013-10-10]
- BLUEMEL E ET AL: "Virtual environments for tbe training of maintenance and service tasks", MACHINE LEARNING AND CYBERNETICS, 2003 INTERNATIONAL CONFERENCE ON; [WINTER SIMULATION CONFERENCE], IEEE, PISCATAWAY, NJ, USA, Bd. 2, 7. Dezember 2003 (2003-12-07), Seiten 2001-2007, XP010679968, DOI: 10.1109/WSC.2003.1261664 ISBN: 978-0-7803-8131-5
- ZHI CHAOYOU ET AL: "A distributed system for aircraft hydraulic system simulation test based on LXI", AUTOTESTCON, 2008 IEEE, IEEE, PISCATAWAY, NJ, USA, 8. September 2008 (2008-09-08), Seiten 185-188, XP031355027, ISBN: 978-1-4244-2225-8
- Misra Jayadev: "Distributed discrete-event simulation", ACM Computing Surveys, Bd. Volume 18, Nr. Issue 1 März 1986 (1986-03), Seiten 39-65, XP002715699, ACM New York, NY, USA DOI: 10.1145/6462.6485 Gefunden im Internet: URL:http://dl.acm.org/citation.cfm?id=6485 [gefunden am 2013-10-30]
- anonymous: "Inter-process communication", Wikipedia , 21 May 2013 (2013-05-21), Retrieved from the Internet: URL:https://en.wikipedia.org/w/index.php?t itle=Inter-process_communication&oldid=556 147343 [retrieved on 2021-04-26]

## Beschreibung

### GEBIET DER ERFINDUNG

Die Erfindung betrifft ein Verfahren zum Simulieren eines komplexen Systems und betrifft weiterhin ein Simulationssystem.

### HINTERGRUND DER ERFINDUNG

Im Wartungsbereich werden Simulationen eingesetzt, um Techniker auf ihre Aufgaben vorzubereiten. Diese Aufgaben umfassen zum Beispiel die Wartung eines technischen Systems, wie etwa einem Flugzeugsystem.

Bei der Simulation wird das technische System in einem Rechner, beispielsweise einem Großrechner simuliert und ein Wartungstechniker kann an einem Terminal geschult werden, das mit dem Großrechner verbunden ist. Mit steigender Komplexität des technischen Systems steigt auch die Komplexität der Simulation. Soll die Simulation geändert werden, um sie etwa an Veränderungen des technischen Systems anzupassen, erfordert dies häufig großen Aufwand. Auch das Erstellen einer neuen Simulation für ein neues technisches System ist aufwendig und teuer.

WO 2007/109507 A2 beschreibt ein System zum Simulieren eines Fahrzeugs. Eine Mehrzahl von Computern ist über ein Netzwerk verbunden. Auf den Computern laufen Simulationsmodule ab. So ist es möglich, das Verhalten eines Bedieners des simulierten Fahrzeugs zu übern.

### ZUSAMMENFASSUNG DER ERFINDUNG

Es ist Aufgabe der Erfindung, den Betrieb von Trainingssimulationen zu vereinfachen und zu beschleunigen.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Die Erfindung wird durch die unabhängigen Ansprüche definiert.

Ein Aspekt der Erfindung betrifft ein Verfahren zum Simulieren eines Systems mit einem Simulationssystem wie weiter unten beschrieben. Das System kann beispielsweise ein technisches System, wie etwa ein Flugzeugsystem, ein Fahrzeugsystem oder eine industrielle Anlage sein. Insbesondere kann das System eine Mehrzahl von Subsystemen umfassen, die miteinander interagieren. Beispiele für solche Subsysteme umfassen Schalter, Steuerungen, Motoren, Ventile, usw.

Das Verfahren kann von einem Computerprogramm ausgeführt werden, das verteilt auf mehreren Rechnern laufen kann, die ein Simulationssystem bilden. Mit dem Computerprogramm wird das System in eine Mehrzahl von Simulationsbausteinen abgebildet, wobei jeder Simulationsbaustein einem oder mehreren Subsystemen des Systems zugeordnet ist. Jeder Simulationsbaustein umfasst wenigstens eine clientseitige Simulationskomponente und eine serverseitige Simulationskomponente.

Gemäß der Erfindung umfasst das Verfahren die Schritte: Erfassen einer Anwenderinteraktion mit wenigstens einer clientseitigen Simulationskomponente; Simulieren des Systems in serverseitigen Simulationskomponenten basierend auf der Anwenderinteraktion, wobei durch die serverseitigen Simulationskomponenten Simulationsdaten für die Subsysteme erzeugt werden; Darstellen des Subsystems basierend auf den Simulationsdaten durch die entsprechenden clientseitigen Simulationskomponenten, wobei die Simulationsbausteine modular aufgebaut und so voneinander getrennt sind, dass zwischen ihnen zum Übermitteln von Simulationsdaten ein Datenaustausch mittels Nachrichten stattfindet. Die clientseitigen Simulationskomponenten werden in einem Client ausgeführt. Die serverseitigen Simulationskomponenten werden in einem Server ausgeführt, der über ein Kommunikationsnetzwerk mit dem Client verbunden ist. Die clientseitigen Simulationskomponenten und die serverseitigen Simulationskomponenten sind in sich abgeschlossene Software-Module, welche getrennt von anderen Software-Modulen austauschbar sind. Das Verfahren weist weiterhin die Schritte auf: Übermitteln der Anwenderinteraktion und Simulationsdaten zwischen der clientseitigen Simulationskomponente und der serverseitigen Simulationskomponente über das Kommunikationsnetzwerk; Ansteuern eines Hardware-Subsystems des Systems durch einen Simulationsbaustein; Erfassen von Ausgabedaten des Hardware-Subsystems durch den Simulationsbaustein; Erzeugen von Simulationsdaten durch den Simulationsbaustein; wobei das Hardware-Subsystem des Systems eine reale physische Komponente des Systems ist und der Simulationsbaustein eine Schnittstelle zu dem Hardware-Subsystem des Systems darstellt.

Die clientseitige Simulationskomponente eines Simulationsbausteins dient zum Darstellen des jeweiligen Subsystems. Die serverseitige Simulationskomponente dient zum Simulieren des jeweiligen Subsystems. Manche der Simulationsbausteine können zum Simulieren von Subsystemen dienen, mit denen ein Anwender interagieren kann, wie beispielsweise ein Schalter. Bei diesen Simulationsbausteinen ist die clientseitige Simulationskomponente dazu ausgeführt, Anwenderinteraktionen, wie etwa Drücken eines Schalters; Kippen eines Schalters; Drehen eines Schalters; Öffnen einer Klappe, Öffnen einer Türe zu erfassen und auch darzustellen.

Bei einer Simulationskomponente des Simulationssystems handelt es sich um ein in sich abgeschlossenes Software-Modul, das getrennt von anderen Software-Modulen ausgetauscht werden kann.

Die Simulation und insbesondere das Simulationsprogramm bzw. die Simulationssoftware ist somit mittels der Simulationsbausteine in modulare Einheiten gegliedert, die wiederverwendet, leicht geändert und ergänzt werden können.

Eine Simulationskomponente einer Simulation kann in einer anderen Simulation wiederverwendet werden. Beispielsweise kann ein Nutzer des Simulationssystems eine neue Simulation basierend auf bereits vorhandenen Simulationsbausteinen zusammenstellen. Auch ist es möglich, eine neue Simulation zu erstellen, die auf einer Mehrzahl von bereits vorhandenen Bausteinen und wenigen neu implementierten Bausteinen basiert. Bei der Entwicklung einer neuen Simulation können somit Kosten gespart werden.

Auch wird damit die Komplexität des Simulationssystem reduziert, da einzelne Simulationsbausteine geändert werden können, ohne dass die anderen Simulationsbausteine durch die Änderungen betroffen sind. Da sich die Simulation des Systems in emergenter Weise aus den Einzelsimulationen der Subsysteme durch die Simulationsbausteine ergibt, können auch hochkomplexe Systeme mittels einer großen Zahl einzelner Simulationsbausteine simuliert werden.

Durch das Aufteilen der Simulation in Simulationsbausteine ist es möglich, die Simulation verteilt ablaufen zu lassen, so dass sie auf mehreren Rechnern bzw. Rechnerkernen ausgeführt werden kann. Insbesondere können die einzelnen server- und/oder clientseitigen Simulationskomponenten parallel auf mehreren Rechnerkernen ausgeführt werden. Komplexe Systeme können damit in einer Server-Cloud simuliert werden.

Gemäß der Erfindung umfasst das Verfahren weiter den Schritt von: Ansteuern eines Hardware-Subsystems und/oder, in einem nicht erfindungsgemässen Aspekt, Ansteuerung eines Software Subsystems (wie z.B. Interaktion mit Originalsoftware) des Systems durch einen Simulationsbaustein. Dabei werden Ausgabedaten des Hardware-Subsystems durch den Simulationsbaustein erfasst und/oder Simulationsdaten durch den Simulationsbaustein erzeugt. Mit anderen Worten stellt der Simulationsbaustein eine Schnittstelle zu einer realen Komponente des Systems dar. Beispielsweise kann eine reale elektronische Steuerung des Systems in die Simulation eingebunden werden. Auf diese Weise kann das Verhalten der Steuerung im Zusammenspiel mit anderen Subsystemen des Systems untersucht werden.

Gemäß der Erfindung umfasst das Verfahren weiter den Schritt: Übermitteln der Anwenderinteraktion und/oder Simulationsdaten zwischen einer clientseitigen Simulationskomponente und einer serverseitigen Simulationskomponente über ein Kommunikationsnetzwerk. Auf diese Weise ist eine geräteunabhängige Nutzung des Simulationssystems im Netzbetrieb möglich. Als Client bzw. Träger der clientseitigen Simulationskomponente können beispielsweise eine Workstation, ein Notebook, ein SmartPad oder ein iPhone verwendet werden.

Simulationsdaten können dabei Daten sein, die Zustände des betreffenden Subsystems beschreiben, wie etwa die Drehgeschwindigkeit eines Motors, die Schalterstellung eines Schalters, oder die elektrische Leistung, die von dem Motor aufgenommen wird. Die Simulationsdaten können einerseits von anderen Simulationsbausteinen dazu verwendet werden, das jeweils zugeordnete Subsystem basierend auf diesen Simulationsdaten zu simulieren. Beispielsweise könnte ein Baustein, der einen Ventilator simuliert, die Drehgeschwindigkeit eines Simulationsbausteins übernehmen, der einen Motor simuliert. Anderseits können die Simulationsdaten zum Darstellen des jeweiligen Subsystems verwendet werden. Ein Client-Rechner könnte beispielsweise einen sich drehenden Ventilator darstellen, wenn die zugehörige Drehgeschwindigkeit ungleich Null ist.

Gemäß einer Ausführungsform der Erfindung wird das Subsystem durch einen Web-Browser dargestellt. Beispielsweise ist die clientseitige Simulationskomponente mittels einer browserbasierten Sprache implementiert. Eine derartige Sprache könnte beispielsweise JavaScripts sein. Aber auch DART oder C/C++ sind möglich, falls dies vom jeweiligen Web-Browser verarbeitet wird. Auf diese Weise wird es möglich, dass jedes Standard-Device als Client-Rechner verwendbar ist, das einen HTML 5 fähigen und WebGL fähigen Browser umfasst, der dann die benötigten clientseitigen Simulationskomponenten des Simulationssystems herunterlädt.

Gemäß einer Ausführungsform der Erfindung umfasst das Verfahren weiter die Schritte von: Übermitteln von Simulationsdaten von einem ersten Simulationsbaustein zu einem zweiten Simulationsbaustein; Simulieren eines dem zweiten Simulationsbaustein zugeordneten Subsystems basierend auf den Simulationsdaten. Wie bereits gesagt sind die Simulationsbausteine modular aufgebaut und können so stark voneinander getrennt sein, dass nur ein Datenaustausch, aber keine gegenseitigen Funktionsaufrufe stattfinden.

Gemäß einer Ausführungsform der Erfindung umfasst das Verfahren weiter den Schritt von: Übermitteln der Simulationsdaten mittels Nachrichtenpaketen zwischen den Simulationsbausteinen. Somit können die Simulationsbausteine auf einfache Art und Weise auf verschiedenen Server-Rechnern installiert werden und/oder parallel ausgeführt werden. Auch sind die Simulationsbausteine voneinander abgegrenzt und können sich gegenseitig nur mittels Nachrichten beeinflussen. Dies kann auch einen Austausch bzw. ein Ändern von Simulationsbausteinen erleichtern.

Gemäß einer Ausführungsform der Erfindung sind die serverseitigen Simulationskomponenten mittels einer JVM-basierten Sprache implementiert. Ein Beispiel einer derartigen Sprache stellt SCALA dar. Insbesondere können die Simulationsbausteine Java-Module sein.

Gemäß der Erfindung werden die clientseitigen Simulationskomponenten in einem Client ausgeführt und die serverseitigen Simulationskomponenten in einem Server ausgeführt, der über ein Kommunikationsnetzwerk mit dem Client verbunden ist.

Client und Server können Software-Komponenten in einem einzigen Rechner sein. Der Client kann ein Client-Rechner und der Server kann ein Server-Rechner sein.

Beispielhaft sind Programmelemente beschrieben, die, wenn sie auf wenigstens einem Prozessor ausgeführt werden, den wenigstens einen Prozessor dazu anleiten, die Schritte des Verfahrens durchzuführen, so wie es obenstehend und untenstehend beschrieben ist. Die Programmelemente können Java-Module, Module von auf Java basierenden Programmiersprachen, JavaScript-Module, Module von browserbasierten Sprachen und Templates wie etwa XML-Templates umfassen. Die Programmelemente können zusammen ein Computerprogramm bilden, das dazu ausgeführt ist, das Simulationsverfahren, so wie obenstehend und untenstehend beschrieben, durchzuführen.

Beispielhaft wird ein computerlesbares Medium beschrieben, auf dem derartige Programmelemente gespeichert sind. Ein computerlesbares Medium kann dabei eine Diskette, eine Harddisk, ein USB-Speichergerät, ein RAM, ein ROM oder ein EPROM sein. Ein computerlesbares Medium kann auch ein Datenkommunikationsnetzwerk sein, wie beispielsweise das Internet, das den Download eines Programmcodes ermöglicht.

Ein Beispiel betrifft das Verwenden des Simulationsverfahrens zum Trainieren eines Technikers für das Warten und/oder Reparieren des Systems. Durch die entsprechend zusammengefügten Simulationsbausteine können Trainings- und Verhaltensmethoden bereitgestellt werden, die auf das Verhalten bzw. die Interaktion eines Anwenders (d.h. des Technikers), eingehen und somit ein nicht-lineares Training ermöglichen.

Erfindungsgemäß ist ein Simulationssystem beschrieben, das dazu ausgeführt ist, ein System zu simulieren.

Gemäß der Erfindung umfasst das Simulationssystem wenigstens einen Rechner, in dem Simulationsbausteine gespeichert sind, die jeweils eine clientseitige Simulationskomponente und eine serverseitige Simulationskomponente umfassen. Das Simulationssystem umfasst wenigstens einen Client-Rechner und einen Server-Rechner, in denen die jeweiligen Simulationskomponenten gespeichert sind, wobei der Server-Rechner mit dem Client-Rechner über ein Kommunikationsnetzwerk verbunden ist. Ein Simulationsbaustein ist einem Subsystem des Systems zugeordnet. Eine clientseitige Simulationskomponente eines Subsystems ist dazu ausgeführt, eine Anwenderinteraktion mit dem simulierten Subsystem zu erfassen und das simulierte Subsystem auf dem Client (bzw. dessen Bildschirm) darzustellen. Eine serverseitige Simulationskomponente ist dazu ausgeführt, das Subsystem basierend auf der Anwenderinteraktion zu simulieren, wobei die Simulationsbausteine modular aufgebaut und so voneinander getrennt sind, dass zwischen ihnen zum Übermitteln von Simulationsdaten ein Datenaustausch mittels Nachrichten stattfindet. Das Kommunikationsnetzwerk ist ausgestaltet, die Anwenderinteraktion und/oder Simulationsdaten zwischen der clientseitigen Simulationskomponente und der serverseitigen Simulationskomponente zu übermitteln. Die clientseitigen Simulationskomponenten und die serverseitigen Simulationskomponenten sind in sich abgeschlossene Software-Module, welche getrennt von anderen Software-Modulen austauschbar sind.

Gemäß der Erfindung umfasst das Simulationssystem weiter ein Hardware-Subsystem des Systems. Wenigstens einer der Simulationsbausteine ist dazu ausgeführt, das Hardware-Subsystem anzusteuern, Ausgabedaten des Hardware-Subsystems zu erfassen, und Simulationsdaten zu erzeugen. Das Hardware-Subsystem des Systems ist eine reale physische Komponente des Systems und der Simulationsbaustein stellt eine Schnittstelle zu dem Hardware-Subsystem des Systems dar.

Das Simulationssystem kann als Trainingssystem im Wartungsbereich für die Luftfahrzeugwartung eingesetzt werden. Auch kann das Simulationssystem als universelles Trainingssystem im industriellen und nicht-industriellen Bereich eingesetzt werden, beispielsweise in der Zulieferindustrie oder in der allgemeinen technischen Industrie. Als Beispiel seien mittelständische Betriebe in der Kfz-Industrie genannt, die ihre Mitarbeiter nicht regelmäßig zu Schulungen schicken können, und die mit dem Simulationssystem geführte Anleitungen zum Ein- und Ausbau von Fahrzeugkomponenten oder zur Wartung erhalten. Auch könnte beim Kauf von Möbeln diesen eine interaktive, dreidimensionale Anleitung beigefügt werden (beispielsweise über einen Internet-Link), die den Aufbau der Möbel beschreibt.

Auch kann das Simulationssystem im staatlichen Bildungs- und Schulsystem eingesetzt werden.

Im Folgenden werden Ausführungsbeispiele der Erfindung mit Bezug auf die beiliegenden Figuren detailliert beschrieben.

### KURZE BESCHREIBUNG DER FIGUREN

Fig. 1 zeigt eine schematische Ansicht eines Simulationssystems gemäß einer Ausführungsform der Erfindung.
Fig. 2 zeigt ein Sequenzdiagramm für ein Verfahren zum Simulieren eines Systems gemäß einer Ausführungsform der Erfindung.

Grundsätzlich sind identische oder ähnliche Teile mit den gleichen Bezugszeichen versehen.

### DETAILLIERTE BESCHREIBUNG VON AUSFÜHRUNGSBEISPIELEN

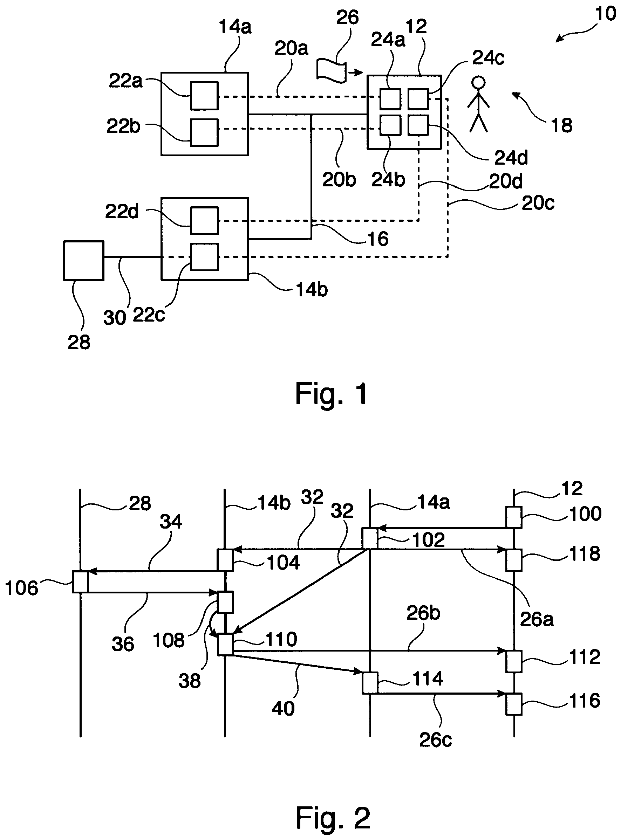

Fig. 1 zeigt ein Simulationssystem 10, das einen oder mehrere Clients 12 und mehrere Server 14a, 14b umfasst, die mit dem Client 12 mittels eines Kommunikationsnetzwerks 16, beispielsweise eines IP-Netzwerks oder dem Internet, verbunden sind. Es ist zu verstehen, dass das System 10 weitere Clients 12 umfassen kann, an denen mehrere Anwender 18 gleichzeitig mit dem System 10 interagieren können. Wenn im Folgenden von dem Client 12 die Rede ist, können auch mehrere Clients 12 gemeint sein.

Der Client 12 und die Server 14a, 14b können eigenständige Rechner, d. h. ein Client-Rechner 12 und zwei Server-Rechner 14a, 14b sein. Es ist aber auch möglich, dass der Client 12 oder die Server 14a, 14b Komponenten in einem Rechner sind, der den Client 12 und die Server 14a, 14b umfasst.

Der Client 12 kann ein PC, Laptop, Tablet, Smartphone oder ähnliches Gerät sein, dass dazu in der Lage ist, über das Kommunikationsnetzwerks 16, beispielsweise das Internet, zu kommunizieren, und auf dem Standard-Software installiert ist, mit der HTML-Seiten angezeigt und JavaScript ausgeführt werden kann, wie etwa einem Web-Browser. Der Client 12 dient dazu, die Eingaben bzw. Bedienungen eines Anwenders 18 zu erfassen und an die Server 14a, 14b weiterzuleiten. Außerdem werden Simulationsergebnisse, die von den Servern 14a, 14b erzeugt werden, durch den Client 12 grafisch oder textuell auf einem Bildschirm dargestellt.

In den Rechnern 12, 14a, 14b des Simulationssystems sind Software-Bausteine 20a, 20b, 20c, 20d gespeichert, die Subsystemen eines Systems zugeordnet sind. Das System kann beispielsweise ein elektrisches, mechanisches, elektromechanisches, hydraulisches und/oder elektronisches Gerät oder System sein, wie sie etwa in Flugzeugen, Fahrzeugen, Kraftwerken, oder im allgemeinen in beliebigen technischen Anlagen enthalten sind. Ein Subsystem eines Systems kann ein Bedienelement, eine elektrische oder elektronische Steuerung, ein Sensor, ein Aktuator oder ähnliches sein.

Durch die Software-Bausteine 20a, 20b, 20c, 20d ist das System 10 dazu in der Lage, das System zu simulieren. Es ist möglich, dass das System 10 nicht nur ein System simuliert, sondern eine Mehrzahl von Systemen. Die Simulationen der Systeme können miteinander verbunden sein und sich gegenseitig beeinflussen.

Ein Anwender 18 kann über einen Client 12 gleichzeitig mit allen Simulationen interagieren. Wenn mehrere Anwender 18 mit mehreren Clients 12 mit dem System 10 verbunden sind, können auch mehrere Anwender 18 gleichzeitig mit mehreren Simulationen interagieren. Zwischen den Simulationen und den Clients 12 kann eine m:n-Beziehung bestehen.

Als vereinfachendes Beispiel kann das System einen Kippschalter, eine Motorsteuerung, einen Motor und einen Ventilator umfassen. Die Bausteine 20a, 20b, 20c, 20d dienen dann zum Simulieren eines dieser Subsysteme.

Da die Software-Bausteine 20a, 20b, 20c, 20d wenigstens eine serverseitige Simulationskomponente 22a, 22b, 22c, 22d und wenigstens eine clientseitige Simulationskomponente 24a, 24b, 24c, 24d umfassen, sind sie in der Fig. 1 als gestrichelte Linien dargestellt. Im Allgemeinen kann ein Subsystem durch ein oder mehrere serverseitige Simulationskomponenten 22a, 22b, 22c, 22d und/oder durch ein oder mehrere clientseitige Simulationskomponenten 24a, 24b, 24c, 24d simuliert werden. Zwischen den serverseitigen Simulationskomponenten 22a, 22b, 22c, 22d und den clientseitigen Simulationskomponenten 24a, 24b, 24c, 24d eines Subsystems kann eine m:n-Beziehung bestehen.

Die clientseitige Simulationskomponente 24a, 24b, 24c, 24d dient dabei zum Darstellen (grafischen und/oder textuellen Simulieren) des Subsystems und zum Erfassen einer Interaktion mit dem Anwender 18. Beispielsweise kann die clientseitige Simulationskomponente 24a einen Kippschalter darstellen und nach dem Betätigen durch den Benutzer 18 den Kippschalter in einem anderen Kippzustand darstellen. Die clientseitigen Simulationskomponenten 24a, 24b, 24c, 24d können beispielsweise mit JavaScript implementiert sein.

Zur Darstellung eines Subsystems können im Client 12 dreidimensionale Darstellungen des Subsystems gespeichert sein, oder im Bedarfsfall von den Servern 14a, 14b an den Client gesendet werden. Weiter können im Client 12 und/oder in einem Server 14a, 14b Templates (beispielsweise XML-Templates) gespeichert sein, mit denen die möglichen betätigbaren Zustände und Interaktionen mit dem Anwender 18 definiert sind.

Die serverseitige Simulationskomponente 22a, 22b, 22c, 22d eines Bausteins 20a, 20b, 20c, 20d dient zum Simulieren des entsprechenden Subsystems des Systems. Zur Kommunikation kann eine serverseitige Simulationskomponente 22a, 22b, 22c, 22d Anwenderbetätigungen bzw. Interaktionen des Anwenders von der entsprechenden clientseitigen Simulationskomponente 24a, 24b, 24c, 24d empfangen, die diese Informationen über das Kommunikationsnetzwerk 16 an die serverseitige Simulationskomponente 22a, 22b, 22c, 22d gesendet hat. Umgekehrt kann eine serverseitige Simulationskomponente 22a, 22b, 22c, 22d ein Simulationsergebnis 26 an die entsprechende clientseitige Simulationskomponente 24a, 24b, 24c, 24d über das Kommunikationsnetzwerk 16 versenden.

Ein Simulationsergebnis 26 umfasst dabei Daten, die Informationen über einen Zustand des zu simulierenden Subsystems enthalten, wie beispielsweise "Kippschalter wurde erfolgreich gekippt" oder "Motor dreht sich mit einer Geschwindigkeit von 30 RPM".

Die serverseitigen Simulationskomponenten 22a, 22b, 22c, 22d sind in einer JVM-(Java Virtual Machine)-basierten Sprache, z. B. Java, Scala, Groovy, Clojure, usw. implementiert und können in einer virtuellen Maschine (JVM) in den Servern 14a, 14b ausgeführt werden. Die serverseitigen Simulationskomponenten 22a, 22b, 22c, 22d können Java-Module sein.

Wie in der Fig. 1 dargestellt, ist es möglich, dass die serverseitigen Simulationskomponenten 22a, 22b, 22c, 22d über mehrere Server 14a, 14b verteilt sind. Es ist aber auch möglich, dass sie in lediglich einem Server installiert sind.

Untereinander kommunizieren die serverseitigen Simulationskomponenten 22a, 22b, 22c, 22d mit einem in den Server 14a, 14b installierten Messaging-(Nachrichten)-System, wie etwa Akka (ein Actor-Message-System).

Weiter kann das Simulationssystem 10 eine (reale) Hardware-Komponente 28 des Systems umfassen, dessen andere Subsysteme von dem Simulationssystem 10 simuliert werden. Beispielsweise kann die Hardware-Komponente 28 eine Motorsteuerung sein, die von der serverseitigen Simulationskomponente 22c über eine Kommunikationsverbindung 30 angesprochen werden kann.

Die Fig. 2 zeigt ein Sequenzdiagramm für einen beispielshaften Ablauf einer Simulation.

Im Schritt 100 betätigt der Benutzer eine clientseitige Simulationskomponente 24a, indem er beispielsweise mit dem Mauszeiger auf eine Darstellung des entsprechenden Subsystems klickt. Diese Darstellung kann beispielsweise einen Kippschalter darstellen.

Anschließend versendet die clientseitige Simulationskomponente 24a diese Interaktion an die entsprechende serverseitige Simulationskomponente 22a im ersten Rechner 14a.

Im Schritt 102 simuliert die serverseitige Simulationskomponente 22a das entsprechende Subsystem (beispielsweise den Kippschalter). Beispielsweise kann in die serverseitige Simulationskomponente 22a abgebildet sein, dass der Kippschalter unter Umständen einen Defekt hat und in diesem Fall der Schalter zwar optisch umgekippt wird, was die serverseitige Simulationskomponente 22a der clientseitigen Simulationskomponente 24a als Erstes Simulationsergebnis 26a mitteilt, der Kippschalter aber keinen Stromkreis schließt.

Im Schritt 118 wird dann die Darstellung des Kippschalters durch die clientseitige Simulationskomponente 24a im Client 12 entsprechend angepasst.

Im Beispiel der Fig. 2 wird jedoch simuliert, dass der Kippschalter einen Stromkreis schließt und damit der Motor und die Steuerung des Systems bestromt werden. Dazu erzeugt die serverseitige Simulationskomponente 22a eine Nachricht 32, die an die serverseitige Simulationskomponente 22c (die die Steuerung simuliert) und die serverseitige Simulationskomponente 22d (die den Motor simuliert) versendet werden.

Im Schritt 104 beginnt die serverseitige Simulationskomponente 22c ihren Teil der Simulation, wobei jedoch die (reale) Hardware-Komponente 28 einbezogen wird. Die serverseitige Simulationskomponente 22c kann beispielsweise Steuerdaten 34 an die Hardware-Komponente 28 versenden (wie etwa eine gewünschte Drehgeschwindigkeit).

Die Steuerdaten 34 werden dann im Schritt 106 von der Hardware-Komponente 28 verarbeitet, die dann weitere Ausgabedaten 36 erzeugt, die dann von der serverseitigen Simulationskomponente 22c weiterverarbeitet werden. Ist die Hardware-Komponente 28 beispielsweise eine Motorsteuerung, können die Ausgabedaten 36 Informationen zum Kommutieren des Motors umfassen.

Die Ausgabedaten 36 können von der serverseitigen Simulationskomponente 22c weiterverarbeitet werden und in einer Nachricht 38 an die serverseitige Simulationskomponente 22d (zur Simulation des Motors) versendet werden.

Im Schritt 110 empfängt die serverseitige Simulationskomponente 22d die Ausgabedaten 36 in der Nachricht 38 und auch die Nachricht 32, dass der Stromkreis vom Kippschalter geschlossen wurde. Mit diesen Daten simuliert die serverseitige Simulationskomponente 22d dann einen Motor. Beispielsweise kann aus den Ausgabedaten 36 ermittelt werden, wie schnell sich der Motor dreht oder ob er sich überhaupt dreht.

Die Drehgeschwindigkeit des Motors kann als zweites Simulationsergebnis 26b an die clientseitige Simulationskomponente 24c übermittelt werden, die im Schritt 112 den sich drehenden Motor im Web-Browser auf dem Client 12 darstellt.

Weiter wird die Drehgeschwindigkeit des Motors in einer Nachricht 40 an die clientseitige Simulationskomponente 22b ermittelt, die im Schritt 114 den Ventilator simuliert und eine entsprechende Drehgeschwindigkeit des Ventilators als drittes Simulationsergebnis 26c an die clientseitige Simulationskomponente 24b übermittelt, die dann im Schritt 116 die Darstellung im Client 12 entsprechend anpasst.

## Patentansprüche

1. Verfahren zum Simulieren eines Systems mit einem Simulationssystem nach Anspruch 5,
wobei das System in eine Mehrzahl von Simulationsbausteinen (20a, 20b, 20c, 20d) abgebildet ist, wobei jeder Simulationsbaustein einem Subsystem des Systems zugeordnet ist, wobei jeder Simulationsbaustein wenigstens eine clientseitige Simulationskomponente (24a, 24b, 24c, 24d) und eine serverseitige Simulationskomponente (22a, 22b, 22c, 22d) umfasst;
wobei das Verfahren die Schritte umfasst:
Erfassen einer Anwenderinteraktion mit wenigstens einer clientseitigen Simulationskomponente (24a, 24b, 24c, 24d);
Simulieren des Systems in serverseitigen Simulationskomponenten (22a, 22b, 22c, 22d) basierend auf der Anwenderinteraktion, wobei durch die serverseitigen Simulationskomponenten Simulationsdaten für die Subsysteme erzeugt werden;
Darstellen des Subsystems basierend auf den Simulationsdaten durch die entsprechenden clientseitigen Simulationskomponenten (24a, 24b, 24c, 24d);
wobei die Simulationsbausteine modular aufgebaut und so voneinander getrennt sind, dass zwischen ihnen zum Übermitteln von Simulationsdaten ein Datenaustausch mittels Nachrichten stattfindet;
wobei die clientseitigen Simulationskomponenten (24a, 24b, 24c, 24d) in einem Client ausgeführt werden;
wobei die serverseitigen Simulationskomponenten (22a, 22b, 22c, 22d) in einem Server ausgeführt werden, der über ein Kommunikationsnetzwerk (16) mit dem Client verbunden ist;
wobei die clientseitigen Simulationskomponenten und die serverseitigen Simulationskomponenten in sich abgeschlossene Software-Module sind, welche getrennt von anderen Software-Modulen austauschbar sind;
wobei das Verfahren weiterhin die Schritte aufweist:
Übermitteln der Anwenderinteraktion und Simulationsdaten zwischen der clientseitigen Simulationskomponente (24a, 24b, 24c, 24d) und der serverseitigen Simulationskomponente (22a, 22b, 22c, 22d) über das Kommunikationsnetzwerk (16);
Ansteuern eines Hardware-Subsystems (28) des Systems durch einen Simulationsbaustein (20c);
Erfassen von Ausgabedaten des Hardware-Subsystems durch den Simulationsbaustein (20c);
Erzeugen von Simulationsdaten durch den Simulationsbaustein (20c);
wobei das Hardware-Subsystem (28) des Systems eine reale physische Komponente des Systems ist und der Simulationsbaustein (20c) eine Schnittstelle zu dem Hardware-Subsystem (28) des Systems darstellt.

2. Verfahren nach Anspruch 1,
wobei das Subsystem durch einen Web-Browser dargestellt wird; und/oder
wobei die clientseitige Simulationskomponente (24a, 24b, 24c, 24d) mittels einer browserbasierten Sprache implementiert ist.

3. Verfahren nach einem der vorhergehenden Ansprüche, weiter umfassend die Schritte:
Übermitteln von Simulationsdaten von einem ersten Simulationsbaustein (20a, 20b, 20c, 20d) zu einem zweiten Simulationsbaustein (20a, 20b, 20c, 20d);
Simulieren eines dem zweiten Simulationsbaustein zugeordneten Subsystems basierend auf den Simulationsdaten.

4. Verfahren nach einem der vorhergehenden Ansprüche, weiter umfassend den Schritt:
Übermitteln der Simulationsdaten mittels Nachrichtenpaketen zwischen den Simulationsbausteinen (20a, 20b, 20c, 20d).

5. Simulationssystem (10) zum Simulieren eines Systems, das Simulationssystem (10) umfassend:
wenigstens einen Client-Rechner und einen Server-Rechner (12, 14a, 14b), in dem Simulationsbausteine (20a, 20b, 20c, 20d) gespeichert sind, die jeweils eine clientseitige Simulationskomponente (24a, 24b, 24c, 24d) und eine serverseitige Simulationskomponente (22a, 22b, 22c, 22d) umfassen;
wobei der Server-Rechner mit dem Client-Rechner über ein Kommunikationsnetzwerk (16) verbunden ist;
wobei ein Simulationsbaustein einem Subsystem des Systems zugeordnet ist;
wobei eine clientseitige Simulationskomponente (24a, 24b, 24c, 24d), die einem Subsystem zugeordnet ist, dazu ausgeführt ist, ein Anwenderinteraktion mit dem simulierten Subsystem zu erfassen und das simulierte Subsystem darzustellen;
wobei eine serverseitige Simulationskomponente (22a, 22b, 22c, 22d) dazu ausgeführt ist, das Subsystem basierend auf der Anwenderinteraktion zu simulieren;
wobei die Simulationsbausteine modular aufgebaut und so voneinander getrennt sind, dass zwischen ihnen zum Übermitteln von Simulationsdaten ein Datenaustausch mittels Nachrichten stattfindet;
wobei das Kommunikationsnetzwerk (16) ausgestaltet ist, die Anwenderinteraktion und/oder Simulationsdaten zwischen der clientseitigen Simulationskomponente (24a, 24b, 24c, 24d) und der serverseitigen Simulationskomponente (22a, 22b, 22c, 22d) zu übermitteln;
wobei die clientseitige Simulationskomponente und die serverseitige Simulationskomponente in sich abgeschlossene Software-Module sind, welche getrennt von anderen Software-Modulen austauschbar sind;
wobei das Simulationssystem (10) weiter umfasst:
ein Hardware-Subsystem (28) des Systems;
wobei wenigstens einer der Simulationsbausteine (20a, 20b, 20c, 20d) dazu ausgeführt ist, das Hardware-Subsystem (28) anzusteuern, Ausgabedaten des Hardware-Subsystems zu erfassen, und Simulationsdaten zu erzeugen;
wobei das Hardware-Subsystem (28) des Systems eine reale physische Komponente des Systems ist und der Simulationsbaustein (20c) eine Schnittstelle zu dem Hardware-Subsystem (28) des Systems darstellt.

## Claims

1. Method for simulating a system with a simulation system according to Claim 5,
wherein the system is mapped to a plurality of simulation blocks (20a, 20b, 20c, 20d), wherein each simulation block is associated with a subsystem of the system, wherein each simulation block comprises at least one client-end simulation component (24a, 24b, 24c, 24d) and a server-end simulation component (22a, 22b, 22c, 22d);
wherein the method comprises the steps of:
recording a user interaction with at least one client-end simulation component (24a, 24b, 24c, 24d);
simulating the system in server-end simulation components (22a, 22b, 22c, 22d) on the basis of the user interaction, wherein the server-end simulation components generate simulation data for the subsystems;
the applicable client-end simulation components (24a, 24b, 24c, 24d) rendering the subsystem on the basis of the simulation data;
wherein the simulation blocks are of modular design and are separate from one another such that a data interchange takes place between them by means of messages in order to transmit simulation data;
wherein the client-end simulation components (24a, 24b, 24c, 24d) are executed in a client;
wherein the server-end simulation components (22a, 22b, 22c, 22d) are executed in a server, which is connected to the client via a communication network (16);
wherein the client-end simulation components and the server-end simulation components are self-contained software modules that are interchangeable separately from other software modules;
wherein the method furthermore comprises the steps of:
transmitting the user interaction and simulation data between the client-end simulation component (24a, 24b, 24c, 24d) and the server-end simulation component (22a, 22b, 22c, 22d) via the communication network (16);
a simulation block (20c) actuating a hardware subsystem (28) of the system;
the simulation block (20c) capturing output data of the hardware subsystem;
the simulation block (20c) generating simulation data; wherein the hardware subsystem (28) of the system is a real physical component of the system, and the simulation block (20c) is an interface to the hardware subsystem (28) of the system.

2. Method according to Claim 1,
wherein the subsystem is rendered by a web browser; and/or
wherein the client-end simulation component (24a, 24b, 24c, 24d) is implemented by means of a browser-based language.

3. Method according to either of the preceding claims, further comprising the steps of:
transmitting simulation data from a first simulation block (20a, 20b, 20c, 20d) to a second simulation block (20a, 20b, 20c, 20d);
simulating a subsystem associated with the second simulation block on the basis of the simulation data.

4. Method according to one of the preceding claims, further comprising the step of:
transmitting the simulation data between the simulation blocks (20a, 20b, 20c, 20d) by means of message packets.

5. Simulation system (10) for simulating a system, the simulation system (10) comprising:
at least one client computer and a server computer (12, 14a, 14b), which stores simulation blocks (20a, 20b, 20c, 20d) that each comprise a client-end simulation component (24a, 24b, 24c, 24d) and a server-end simulation component (22a, 22b, 22c, 22d);
wherein the server computer is connected to the client computer via a communication network (16);
wherein a simulation block is associated with a subsystem of the system;
wherein a client-end simulation component (24a, 24b, 24c, 24d) associated with a subsystem is designed to record a user interaction with the simulated subsystem and to render the simulated subsystem;
wherein a server-end simulation component (22a, 22b, 22c, 22d) is designed to simulate the subsystem on the basis of the user interaction;
wherein the simulation blocks are of modular design and are separate from one another such that a data interchange takes place between them by means of messages in order to transmit simulation data;
wherein the communication network (16) is configured to transmit the user interaction and/or simulation data between the client-end simulation component (24a, 24b, 24c, 24d) and the server-end simulation component (22a, 22b, 22c, 22d);
wherein the client-end simulation component and the server-end simulation component are self-contained software modules that are interchangeable separately from other software modules;
wherein the selection system (10) further comprises:
a hardware subsystem (28) of the system;
wherein at least one of the simulation blocks (20a, 20b, 20c, 20d) is designed to actuate the hardware subsystem (28), to capture output data of the hardware subsystem and to generate simulation data;
wherein the hardware subsystem (28) of the system is a real physical component of the system, and the simulation block (20c) is an interface to the hardware subsystem (28) of the system.

## Revendications

1. Procédé de simulation d'un système avec un système de simulation selon la revendication 5,
le système étant représenté en une pluralité de blocs fonctionnels de simulation (20a, 20b, 20c, 20d), un sous-système du système étant associé à chaque bloc fonctionnel de simulation, chaque bloc fonctionnel de simulation comportant au moins un composant de simulation côté client (24a, 24b, 24c, 24d) et un composant de simulation côté serveur (22a, 22b, 22c, 22d) ;
le procédé comprenant les étapes suivantes :
détection d'une interaction d'utilisateur avec au moins un composant de simulation côté client (24a, 24b, 24c, 24d) ;
simulation du système dans les composants de simulation côté serveur (22a, 22b, 22c, 22d) en se basant sur l'interaction d'utilisateur, des données de simulation pour les sous-systèmes étant générées par les composants de simulation côté serveur ;
représentation du sous-système sur la base des données de simulation par les composants de simulation côté client (24a, 24b, 24c, 24d) correspondants ;
les blocs fonctionnels de simulation étant de constitution modulaire et étant séparés les uns des autres de telle sorte qu'un échange de données au moyen de messages a lieu entre eux en vue de communiquer des données de simulation ;
les composants de simulation côté client (24a, 24b, 24c, 24d) étant exécutés dans un client ;
les composants de simulation côté serveur (22a, 22b, 22c, 22d) étant exécutés dans un serveur qui est relié au client par le biais d'un réseau de communication (16) ;
les composants de simulation côté client et les composants de simulation côté serveur étant des modules logiciels fermés en eux-mêmes, lesquels peuvent être remplacés séparément des autres modules logiciels ;
le procédé comprenant en outre les étapes suivantes :
communication de l'interaction d'utilisateur et des données de simulation entre les composants de simulation côté client (24a, 24b, 24c, 24d) et les composants de simulation côté serveur (22a, 22b, 22c, 22d) par le biais du réseau de communication (16) ;
commande d'un sous-système matériel (28) du système par un bloc fonctionnel de simulation (20c) ;
acquisition de données de sortie du sous-système matériel par le bloc fonctionnel de simulation (20c) ; génération de données de simulation par le bloc fonctionnel de simulation (20c) ;
le sous-système matériel (28) du système étant un composant physique réel du système et le bloc fonctionnel de simulation (20c) représentant une interface vers le sous-système matériel (28) du système.

2. Procédé selon la revendication 1,
le sous-système étant représenté par un navigateur Web ; et/ou
les composants de simulation côté client (24a, 24b, 24c, 24d) étant mis en œuvre au moyen d'un langage basé sur navigateur.

3. Procédé selon l'une des revendications précédentes, comprenant en outre les étapes suivantes :
communication des données de simulation d'un premier bloc fonctionnel de simulation (20a, 20b, 20c, 20d) à un deuxième bloc fonctionnel de simulation (20a, 20b, 20c, 20d) ;
simulation d'un sous-système associé au deuxième bloc fonctionnel de simulation en se basant sur les données de simulation.

4. Procédé selon l'une des revendications précédentes, comprenant en outre l'étape suivante :
communication des données de simulation au moyen de paquets de messages entre les blocs fonctionnels de simulation (20a, 20b, 20c, 20d).

5. Système de simulation (10) destiné à simuler un système, le système de simulation (10) comprenant :
au moins un ordinateur client et un ordinateur serveur (12, 14a, 14b), dans lesquels sont enregistrés des blocs fonctionnels de simulation (20a, 20b, 20c, 20d), lesquels comportent respectivement un composant de simulation côté client (24a, 24b, 24c, 24d) et un composant de simulation côté serveur (22a, 22b, 22c, 22d) ;
l'ordinateur serveur étant relié à l'ordinateur client par le biais d'un réseau de communication (16) ;
un bloc fonctionnel de simulation étant associé à un sous-système du système ;
un composant de simulation côté client (24a, 24b, 24c, 24d) qui est associé à un sous-système étant réalisé pour détecter une interaction d'utilisateur avec le sous-système simulé et pour représenter le sous-système simulé ;
un composant de simulation côté serveur (22a, 22b, 22c, 22d) étant réalisé pour simuler le sous-système en se basant sur l'interaction d'utilisateur ;
les blocs fonctionnels de simulation étant de constitution modulaire et étant séparés les uns des autres de telle sorte qu'un échange de données au moyen de messages a lieu entre eux en vue de communiquer des données de simulation ;
le réseau de communication (16) étant configuré pour communiquer l'interaction d'utilisateur et/ou les données de simulation entre les composants de simulation côté client (24a, 24b, 24c, 24d) et les composants de simulation côté serveur (22a, 22b, 22c, 22d) ;
les composants de simulation côté client et les composants de simulation côté serveur étant des modules logiciels fermés en eux-mêmes, lesquels peuvent être remplacés séparément des autres modules logiciels ;
le système de simulation (10) comprenant en outre :
un sous-système matériel (28) du système ;
au moins l'un des blocs fonctionnels de simulation (20a, 20b, 20c, 20d) étant réalisé pour commander le sous-système matériel (28), acquérir des données de sortie du sous-système matériel et générer des données de simulation ;
le sous-système matériel (28) du système étant un composant physique réel du système et le bloc fonctionnel de simulation (20c) représentant une interface vers le sous-système matériel (28) du système.
